# EUROPEAN PATENT SPECIFICATION

(11) **EP 3 988 371 B1**
(45) Date of publication and mention of the grant of the patent: **25.02.2026**
(21) Application number: 20825126.4
(22) Date of filing: 23.03.2020
(51) Int. Cl.: B60L 3/00, B60L 3/10

(54) **TRAIN SAFETY SYSTEM, TRAIN SAFETY CONTROL METHOD, AND ONBOARD TRAIN DEVICE**
ZUGSICHERHEITSSYSTEM, ZUGSICHERHEITSSTEUERVERFAHREN UND VORRICHTUNG AN BORD EINES ZUGES
SYSTÈME DE SÉCURITÉ DE TRAIN, PROCÉDÉ DE COMMANDE DE SÉCURITÉ DE TRAIN, ET DISPOSITIF DE TRAIN EMBARQUÉ

(30) Priority: 21.06.2019 JP 2019115923
(43) Date of publication of application: 27.04.2022
(73) Proprietor: Hitachi, Ltd., Tokyo 100-8280 (JP)
(72) Inventor: NAKAMURA, Tomohiko, Tokyo 100-8280 (JP); KOIKE, Jun, Tokyo 100-8280 (JP)
(74) Representative: MERH-IP Matias Erny Reichl Hoffmann Patentanwälte PartG mbB
(86) International application number: PCT/JP2020/012803
(87) International publication number: WO 2020/255511

(56) References cited:
- GB-A- 2 454 594
- JP-A- 2000 121 658
- JP-A- 2000 127 963
- JP-A- 2007 137 076
- JP-A- 2009 124 810
- JP-A- 2012 042 271
- JP-A- 2015 126 633
- JP-A- 2015 126 633
- JP-A- 2016 092 954
- JP-A- 2017 147 825
- JP-A- 2018 091 683
- JP-A- H02 162 226
- JP-A- H05 249 127
- JP-A- S57 177 204
- JP-A- S61 231 805

## Description

### Technical Field

The present invention relates to a train protection system, a train protective control method, and a train onboard device.

### Background Art

Disclosed in Patent Document 1 is a technology that uses equipment including a tachogenerator and a speed sensor. The tachogenerator generates a speed pulse based on the rotation speed of a wheel. The speed sensor detects a first train speed based on waves that are reflected when millimeter waves are radiated onto a track. The technology compares the first train speed with a second train speed generated based on the speed pulse. If the result of the comparison indicates that the first and second train speeds differ by a predetermined value or greater, the technology determines that idling, gliding, or other malfunction has occurred.

Patent Document 2 discloses a structure with an antenna provided on a vehicle body which emits a vibration wave at the prescribed angle theta toward the rails or the ground and receives the vibration wave reflected on the ground and returned again to the antenna.

Patent Document 3 discloses a method wherein the detection of the occurrence of slip or slid and the activation of readhesion control are separated from each other.

### Prior Art Document

### Patent Document

Patent Document 1: JP-2017-163623-A
Patent Document 2: JP S57 177204 A
Patent Document 3: JP 2009 124810 A

### Summary of the Invention

### Problems to be Solved by the Invention

However, it is conceivable that a certain speed detection error may regularly occur between a speed value detected by the tachogenerator and a speed value detected by a millimeter-wave sensor. Therefore, if such an error is greater than an abnormality judgment threshold, the technology disclosed in Patent Document 1 inadvertently determines that the output of the tachogenerator is abnormal although neither idling nor gliding has occurred. Further, the abnormality judgment threshold may be increased in order to avoid such erroneous detection of idling and gliding. However, increasing the abnormality judgment threshold delays the detection of idling and gliding.

The present invention has been made in view of the above problems. An object of the present invention is to provide a train protection system that is able to more accurately detect the idling and gliding of a wheel even in a case where a steady-state speed detection error occurs between a speed value detected based on the rotation speed of a wheel or an axle and a speed value detected by a millimeter-wave sensor or other non-contact speed sensor.

### Means for Solving the Problems

The invention is set out in the appended set of claims. Especially, there is provided a train protection system including a vehicle and a train onboard device. The vehicle runs when a wheel rolls on a track. The train onboard device controls the running of the vehicle. The train protection system includes a first device and a second device. The first device detects rotation of at least one of the wheel and an axle of the wheel. The second device detects a running state of the vehicle. In accordance with the amount of change in speed difference generated based on the result of detection by the first device and the result of detection by the second device or with a difference in acceleration, the train onboard device determines at least one of gliding and idling of the vehicle, and exercises protective control over the running of the vehicle in accordance with the result of the determination and with a signal from a ground device.

### Advantage of the Invention

The present invention provides a train protection system that is able to detect occurrence of an incident even from a slight change in rotation speed in accordance with principles of detecting idling, gliding, or re-adhesion from a phenomenon of a sudden change in the rotation speed of a wheel.

### Brief Description of the Drawings

FIG. 1 is a schematic block diagram illustrating a train protection system according to embodiments (first to third embodiments) of the present invention.
FIG. 2 is a chart illustrating speeds and accelerations that are internally computed in a train onboard device included in the train protection system depicted in FIG. 1.
FIG. 3 is a timing diagram illustrating how gliding is detected by the train protection system according to the first embodiment.
FIG. 4 is a timing diagram illustrating how idling is detected by the train protection system according to the first embodiment.
FIG. 5 is a timing diagram illustrating how gliding is detected by the train protection system according to the second embodiment.
FIG. 6 is a timing diagram illustrating how idling is detected by the train protection system according to the second embodiment.
FIG. 7 is a flowchart illustrating operating steps of a train protective control method adopted by the train protection system depicted in FIG. 1.

### Modes for Carrying Out the Invention

First of all, terms are defined here based on relevant laws and regulations. The term "train" denotes a vehicle that is composed for operation on a railway track other than a railway station. A vehicle operated as a train needs to meet more stringent safety requirements than a vehicle. Therefore, the train needs to have a driver on board. Conversely, a vehicle used for an unattended operation cannot be called a train. Such a vehicle may be called a vehicle or a vehicle body.

An automatic train control (ATC) device is a type of signaling equipment for railways. Based on conditions regarding the distance to a preceding train and the course, the automatic train control device has a function of issuing a signal, to a host train, indicative of a permissible train operating speed and automatically decreasing the speed of the host train in accordance with the issued signal.

According to a general interpretation before disclosure by the present application, a train protection system includes at least a train onboard device (hereinafter referred to also as an "onboard device") and a ground device, and is configured so as to implement a safe operation through the use of a control device such as an ATC device.

The train protection system disclosed by the present application is an increasingly high-precision advanced train protection system that is obtained by improving the above-mentioned general train protection system so as to cope with a dense train timetable and provide an unattended autonomous operation. When an unattended operation is performed, the term "vehicle" may occasionally be used instead of the term "train" in accordance with the above-mentioned laws and regulations. In this document, however, the term "train protection system" is used to describe a system that provides an unattended operation and meets stringent safety requirements.

Further, the train onboard device (onboard device) disclosed by the present application is a control device that is mounted in a vehicle in order to safely operate the vehicle based on at least an on-rail position X and a speed V. It should be noted that the onboard device is implementable even if it does not match the above definition, that is, does not have a function of receiving (transmitting and receiving) protection information Y from (to and from) a ground coil. Furthermore, the onboard device is generally implemented by software that allows a computer having a CPU (Central Processing Unit) and a memory to execute a program stored in the memory. However, the onboard device may alternatively be implemented by hardware that is designed, for example, with an integrated circuit.

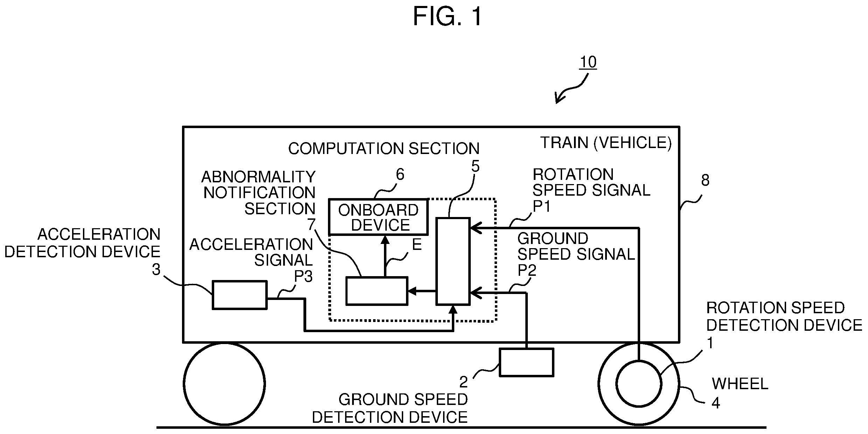

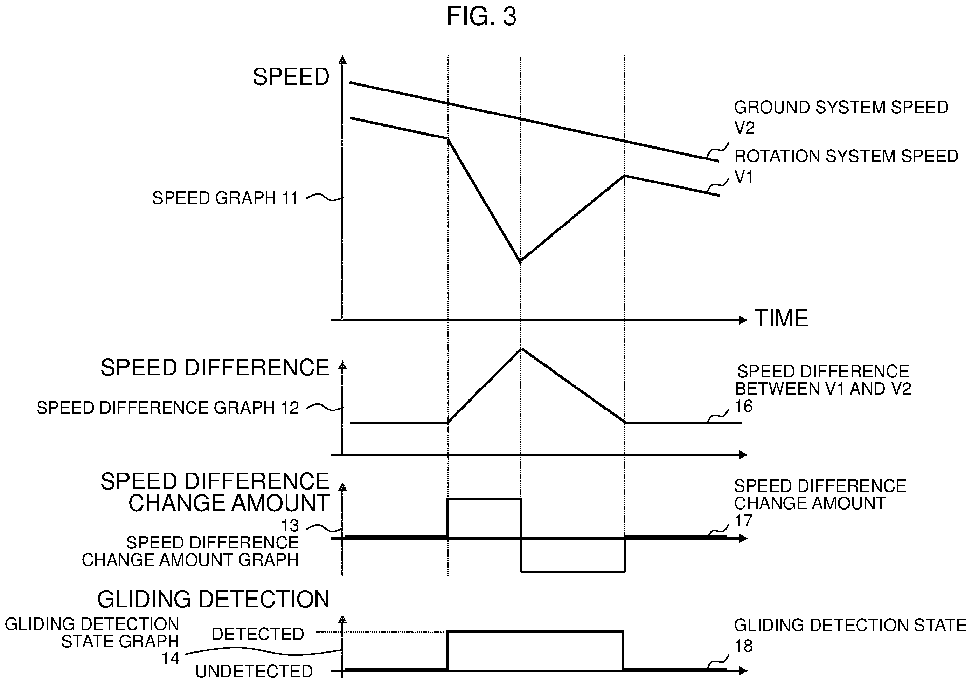

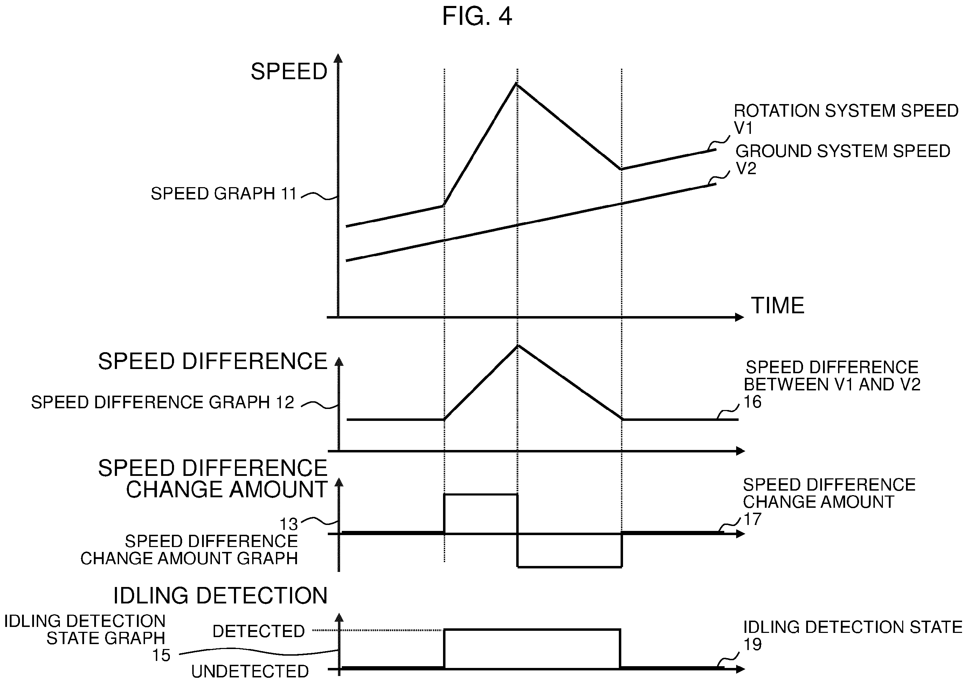

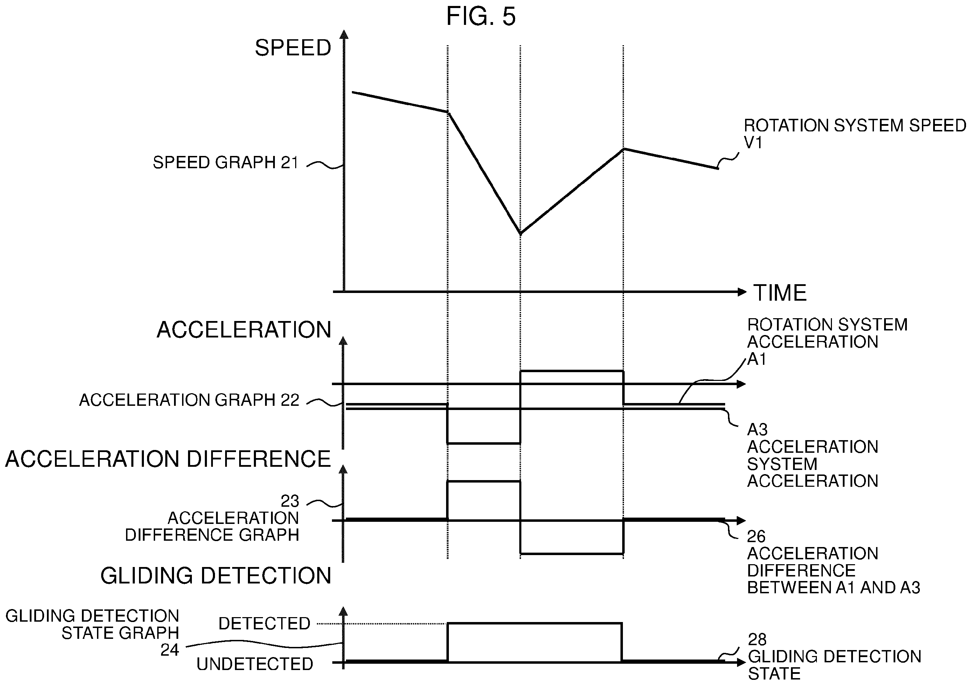

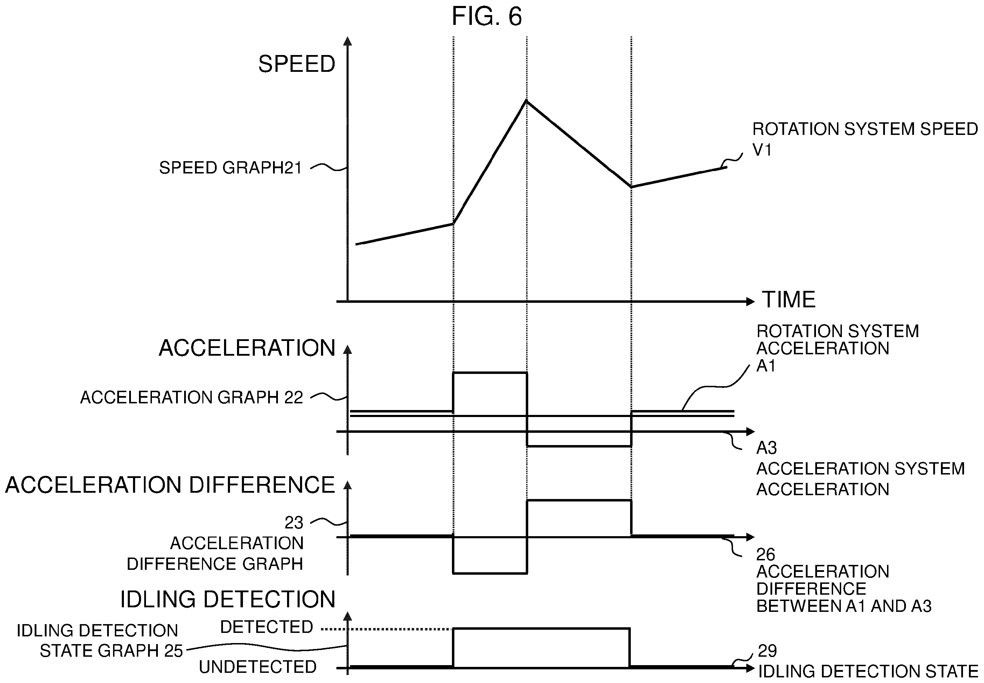

Embodiments of the present invention are described below with reference to the accompanying drawings. Further, the first to third embodiments of the present invention are depicted generally in FIGS. 1, 2, and 9. Additionally, the first embodiment is depicted in FIGS. 3 and 4, and the second embodiment is depicted in FIGS. 5 and 6. It should be noted that a train protection system is abbreviated to "the present system" in the following description. Similarly, a train protective control method is abbreviated to "the present method."

### FIRST EMBODIMENT

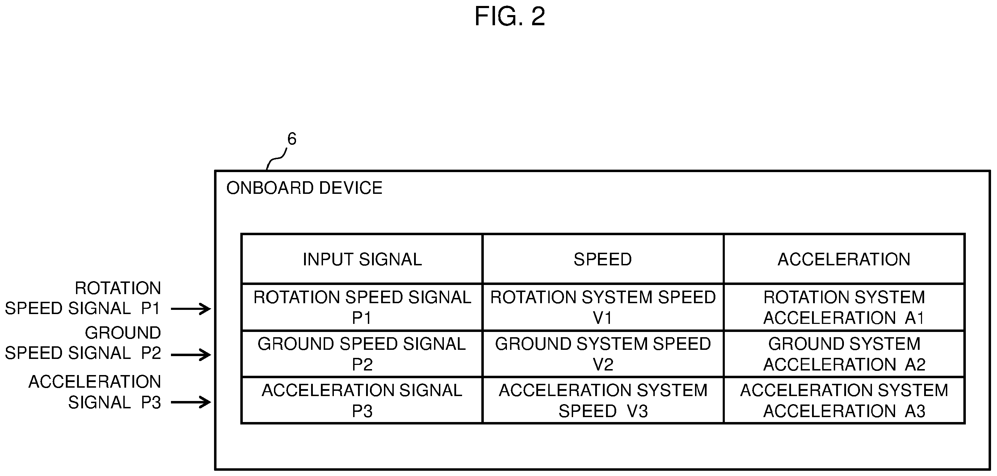

FIG. 1 is a schematic block diagram illustrating the present system. FIG. 2 is a chart illustrating speeds and accelerations that are internally computed in an onboard device 6 included in the present system depicted in FIG. 1. The present system 10 provides support for a safe operation of a vehicle 8 by using protection information Y (not depicted) that includes information regarding at least either one of an on-rail position X (not depicted) in a moving block and a speed V.

The present system 10 includes the vehicle 8, a rotation speed detection device (first device) 1, a ground speed detection device (second device) 2, an acceleration detection device (second device) 3, a computation section 5, the onboard device 6, and an abnormality notification section 7. The vehicle 8 is a railway vehicle having a wheel 4. The rotation speed detection device 1 detects a rotation speed of the wheel 4 or an axle and generates a rotation speed signal P1. The rotation speed signal P1 is inputted to the onboard device 6 which controls the vehicle 8.

Here, the first device 1 is a rotation speed detection device for detecting a speed derived from the rotation of the wheel 4. The second devices 2 and 3 need not necessarily be the ground speed detection device 2 or the acceleration detection device 3 if the second devices 2 and 3 function as means for detecting a train speed that is not derived from the rotation of the wheel 4. The computation section 5 determines a difference between a first system speed V1 and second system speeds V2 and V3 and an amount of change in the difference. When a threshold is exceeded by the amount of change in the difference, the abnormality notification section 7 determines that an abnormal situation, namely, at least either one of idling and gliding of the wheel 4, has occurred (begun).

In the above case, the abnormality notification section 7 inputs an abnormal situation occurrence signal E to the onboard device 6. The abnormal situation occurrence signal E includes information for distinctively reporting an incident such as idling, gliding, or re-adhesion. It should be noted that the onboard device 6 depicted in FIG. 1 need not necessarily include the ground speed detection device 2, the acceleration detection device 3, the computation section 5, and the abnormality notification section 7. The ground speed detection device 2, the acceleration detection device 3, the computation section 5, and the abnormality notification section 7 merely need to be connected to the onboard device 6 in such a manner as to enable them to exchange control signals with the onboard device 6. It does not matter whether or not they are accommodated in the same housing as the onboard device 6.

The present system 10 operates on principles of detecting an incident, such as idling, gliding, or re-adhesion, from a phenomenon of a sudden change in the rotation speed of the wheel 4. Further, the first device 1 outputs the first system speed V1 of the vehicle 8 in accordance with a first phenomenon based on the rotation of the wheel 4 of the vehicle 8. Therefore, the present system 10 is able to detect a phenomenon of a sudden change in the rotation speed of the wheel by monitoring the first system speed V1 and thus detect an incident such as idling, gliding, or re-adhesion.

The ground speed detection device 2 generates a ground speed signal P2 that detects a relative speed of the train with respect to the ground. The ground speed signal P2 is inputted to the onboard device 6 which controls the vehicle 8. The ground speed detection device (second device) 2 irradiates the ground or an object with an electromagnetic wave, and obtains the ground speed signal P2 based on a resulting reflected wave. In other words, the second device 2 regards the second system speed V2, which is obtained by applying the Doppler effect, as the ground speed of the vehicle 8. The Doppler effect is a second phenomenon that is not directly related to the first phenomenon based on the rotation of the wheel 4.

For example, an electromagnetic wave in a millimeter wave band may be applied as a Doppler effect wave. Alternatively, however, an electromagnetic wave in a band other than the millimeter wave band may be applied.

The second device 2, which is based on the second phenomenon as described above, has an advantage of increasing accuracy of the present system 10. The ground speed signal P2 may be a signal regarding an amount of a physical change detected by the ground speed detection device 2. Further, the ground speed signal P2 may be information regarding a train speed that is obtained by conversion in the ground speed detection device 2. The acceleration system detection device 3, which detects the acceleration of the train, generates an acceleration signal P3. The acceleration signal P3 is then inputted to the onboard device 6 which controls the vehicle 8.

Moreover, if a required inter-vehicle distance is significantly longer than a braking distance determined by braking performance, it is conceivable that accuracy of the protection information Y has room for improvement. This has been a constraint on densification of a train timetable. According to the present system 10, the inter-vehicle distance on track can be shortened by increasing the accuracy of the protection information Y regarding the on-rail position X in the moving block and the speed V. This provides an advantage of increasing the number of trains in service by densifying the train timetable. Further, this eventually takes a step closer to realization of an unattended operation. In the above-described manner, the present system 10 is able to provide support for a safe operation of the vehicle 8.

As depicted in FIG. 2, the rotation speed signal P1, the ground speed signal P2, and the acceleration signal P3 are inputted to the onboard device 6. These signals are obtained from different types of sensors and used to calculate speeds and acceleration. The train speed is calculated based on the rotation speed signal P1 and on information, for example, regarding a diameter of the wheel 4. The calculated train speed is regarded as a rotation system speed V1. Further, the acceleration is calculated from the first system speed V1, and the calculated acceleration is regarded as a rotation system acceleration A1.

In a case where the ground speed signal P2 is a signal regarding the amount of a physical change detected by the ground speed detection device (second device) 2, computation is performed in the onboard device 6 to calculate the train speed. Meanwhile, in a case where the ground speed signal P2 is already converted to indicate the train speed, the resulting value is regarded as the train speed. This train speed is assumed to be a ground system speed V2.

Further, the acceleration is computed from the ground system speed V2, and the computed acceleration is assumed to be a ground system acceleration A2. The train speed is computed from the acceleration signal P3, and the computed train speed is assumed to be an acceleration system speed V3. Furthermore, the acceleration derived from the acceleration signal is assumed to be an acceleration system acceleration A3.

FIG. 3 is a timing diagram illustrating how gliding is detected by the train protection system according to the first embodiment of the present invention. The horizontal axis of FIG. 3 represents time, and this time axis is used in common to depict four different graphs sequentially from the top of the vertical axis in such a manner that they are positioned apart from each other. The depicted graphs are a speed graph 11, a speed difference graph 12, a speed difference change amount graph 13, and a gliding detection state graph 14. Each of the graphs is described below. The processing described below is performed by the onboard device 6.

The vertical axis of the speed graph 11 represents speed. A speed difference 16 between the rotation system speed V1 and the ground system speed V2 that are depicted in the speed graph 11 is depicted in the speed difference graph 12. In other words, the vertical axis of the speed difference graph 12 represents the speed difference. The vertical axis of the speed difference change amount graph 13 represents a calculated speed difference change amount 17. When the change amount 17 is positive, it indicates an increase in the amount of change. Meanwhile, when the change amount 17 is negative, it indicates a decrease in the amount of change.

The gliding detection state graph 14 is formed by a rectangular wave that makes it easy for the vertical axis to distinctively indicate a detected state and an undetected state. In other words, the gliding detection state graph 14 is obtained by graphing a gliding detection state 18 based on the speed difference change amount 17 indicated by the speed difference change amount graph 13.

In the present system 10, the onboard device 6 calculates the speed difference 16 from the rotation system speed (first system speed) V1 and the ground system speed (second system speed) V2 and calculates the speed difference change amount 17 from the speed difference 16. Meanwhile, in a case where the acceleration detection device is mounted in the present system 10 instead of a ground system speed detection device, the speed difference 16 is calculated from the rotation system speed (first system speed) V1 and the acceleration system speed V3 that is generated by integrating the acceleration signal, and then the calculated speed difference 16 is used to calculate the speed difference change amount 17. In a case where the calculated speed difference change amount 17 is larger or smaller than a threshold, the gliding detection state 18 is determined to be a "gliding detected" state.

FIG. 4 is a timing diagram illustrating how idling is detected by the train protection system according to the first embodiment of the present invention. The horizontal axis of FIG. 4 represents time, and this time axis is used in common to depict four different graphs sequentially from the top of the vertical axis in such a manner that they are positioned apart from each other. The depicted graphs are the speed graph 11, the speed difference graph 12, the speed difference change amount graph 13, and an idling detection state graph 15. Each of the graphs is described below. The processing described below is performed by the onboard device 6.

The idling detection state graph 15 is also formed by a rectangular wave that makes it easy for the vertical axis to distinctively indicate a detected state and an undetected state. In other words, the idling detection state graph 15 is also obtained by graphing an idling detection state 19 based on the speed difference change amount 17 indicated by the speed difference change amount graph 13.

FIG. 4 differs from FIG. 3 in that the idling detection state graph 15 is depicted instead of the gliding detection state graph 14. In the case of gliding, the rotation of the wheel 4 is nearly locked. Therefore, FIG. 3 indicates that the first system speed V1 is suddenly decreased. Meanwhile, in the case of idling, which is a reverse case, FIG. 4 indicates that the first system speed V1 is suddenly increased.

Idling generally occurs while the train is powering. Therefore, FIG. 4 differs from FIG. 3, which indicates the detection of gliding, in that the speed is indicated by an upward line in the speed graph 11 and that, in the case of idling, the rotation system speed V1 suddenly increases for a temporary period of time. However, a detection method used in the case indicated in FIG. 4 is similar to the detection method used in the case indicated in FIG. 3. More specifically, the speed difference 16 is determined from two sets of speed information in order to calculate the speed difference change amount 17. When the calculated speed difference change amount 17 is larger or smaller than a threshold, the idling detection state 19 indicated in the idling detection state graph 15 is determined to be an "idling detected" state. Here, the speed difference 16 may be calculated as the speed difference between the rotation system speed V1 and the ground system speed V2 or as the speed difference between the rotation system speed V1 and the acceleration system speed V3.

As described above, the present system 10 detects the change amount 17 of the speed difference 16 between the train speed calculated from the rotation speed signal P1 of the wheel 4, that is, the rotation system speed (first system speed) V1, and the train speed determined by the ground speed detection device 2, that is, the ground system speed (second system speed) V2, and uses the result of the detection as one of conditions for determining whether idling or gliding is detected and whether such an incident is terminated. Therefore, even when the amount of change in the rotation speed is slight, the present system 10 is able to quickly detect the occurrence and termination of an abnormal situation in accordance with the principles of detecting idling, gliding, or re-adhesion from a phenomenon of a sudden change in the rotation speed of the wheel 4.

Consequently, even in a case where there is a steady difference between the detected rotation system speed V1 and the detected ground system speed V2 (the detected accelerometer speed V3 generated by the acceleration signal), the present system 10 is able to detect idling, gliding, or re-adhesion more accurately than before. This leads to increased safety of train operation.

### SECOND EMBODIMENT

FIG. 5 is a timing diagram illustrating how gliding is detected by the train protection system according to the second embodiment of the present invention. The horizontal axis of FIG. 5 represents time, and this time axis is used in common to depict four different graphs sequentially from the top of the vertical axis in such a manner that they are positioned apart from each other. The depicted graphs are a speed graph 21, an acceleration graph 22, an acceleration difference graph 23, and a gliding detection state graph 24. Each of the graphs is described below. The processing described below is performed by the onboard device 6.

The rotation system speed (first system speed) V1 is indicated by the speed graph 21. The vertical axis of the speed graph 21 represents speed while the horizontal axis represents time. The rotation system acceleration A1 and the acceleration system acceleration A3 are indicated by the acceleration graph 22. The vertical axis of the acceleration graph 22 represents acceleration while the horizontal axis represents time. The acceleration difference 26 between the rotation system acceleration A1 and the acceleration system acceleration A3 is calculated, and the result of the calculation is indicated by the acceleration difference graph 23. The vertical axis of the acceleration difference graph 23 represents acceleration difference while the horizontal axis represents time.

The gliding detection state graph 24 indicates a gliding detection state 28 that is graphed based on the acceleration difference 26 indicated by a speed difference graph 23. The vertical axis of the gliding detection state graph 24 represents gliding detection while the horizontal axis represents time.

The present system 10 calculates the rotation system acceleration A1 by causing the onboard device 6 to differentiate the first system speed V1, calculates the acceleration system acceleration A3 from the acceleration signal P3 received from the acceleration detection device 3, and then calculates the acceleration difference 26 between the rotation system acceleration A1 and the acceleration system acceleration A3. Meanwhile, in a case where the ground speed detection device is used instead of the acceleration detection device 3, the present system 10 calculates the acceleration difference between the rotation system acceleration A1 derived from the first system speed V1 and the ground system acceleration A2 derived from the ground system speed V2. When the calculated acceleration difference 26 is larger or smaller than a threshold, the gliding detection state 28 is determined to be the "gliding detected" state.

FIG. 6 is a timing diagram illustrating how idling is detected by the train protection system according to the second embodiment of the present invention. The horizontal axis of FIG. 6 represents time, and this time axis is used in common to depict four different graphs sequentially from the top of the vertical axis in such a manner that they are positioned apart from each other. The depicted graphs are the speed graph 21, the acceleration graph 22, the acceleration difference graph 23, and an idling detection state graph 25.

FIG. 6 differs from FIG. 5 in that the idling detection state graph 25 is depicted instead of the gliding detection state graph 24. In the case of gliding, the rotation of the wheel 4 is nearly locked. Therefore, FIG. 5 indicates that the rotation system speed (first system speed) V1 is suddenly decreased. Meanwhile, in the case of idling, which is a reverse case, FIG. 6 indicates that the rotation system speed (first system speed) V1 is suddenly increased. Each of the graphs is described below. The processing described below is also performed by the onboard device 6.

The rotation system speed V1 is indicated by the speed graph 21. The rotation system acceleration A1 and the acceleration system acceleration A3 are indicated by the acceleration graph 22. The acceleration difference 26 between the rotation system acceleration A1 and the acceleration system acceleration A3 (or the ground system acceleration A2) is calculated, and the result of the calculation is indicated by the acceleration difference graph 23. The idling detection state graph 25 is obtained by graphing an idling detection state 29 based on the acceleration difference 26 indicated by the acceleration difference graph 23.

Idling generally occurs while the train is powering. Therefore, FIG. 6 differs from FIG. 5, which indicates the detection of gliding, in that the speed is indicated by an upward line in the speed graph 21 and that, in the case of idling, the rotation system speed V1 suddenly increases for a temporary period of time. However, a detection method used in the case indicated in FIG. 6 is similar to the detection method used in the case indicated in FIG. 5. More specifically, the acceleration difference 26 is determined from two sets of acceleration information in order to determine whether the acceleration difference 26 is larger or smaller than a threshold. When the acceleration difference 26 is larger or smaller than the threshold, the idling detection state 29 indicated by the idling detection state graph 25 is determined to be the "idling detected" state.

### [Supplement]

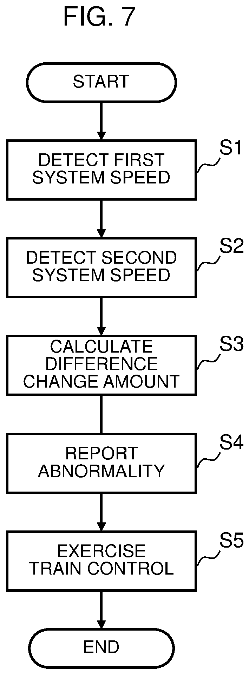

It should be noted that the incidents indicated by the graphs in FIGS. 3 to 6 are made extremely conspicuous to explain the present system 10 according to the first and second embodiments. In reality, however, the present system 10 copes with an incident immediately after the detection of the incident even if it is slight. In order to immediately cope with such an incident and achieve other purposes, the present system 10 repeatedly and continuously performs processing steps ranging from a first system speed detection step S1 to an abnormality notification step S4, which are depicted in FIG. 7, and performs a train control step S5 as appropriate.

In the train control step S5, the onboard device 6 issues control signals that are related to the following illustratively enumerated procedures and are to be executed by individual sections (not depicted). When the train glides, decrease braking power. When re-adhesion occurs subsequently to gliding, increase braking power. If idling occurs, take measures against idling by decreasing a driving torque, sprinkling friction sand between a driving wheel and a rail, and increasing an axle load on the driving wheel. When re-adhesion occurs subsequently to idling, cancel the measures against idling. Control may be exercised as needed to perform procedures other than those enumerated above.

It should be noted that the present invention is not limited to the first and second embodiments which have been described above. The present invention includes various modifications. For example, the foregoing embodiments have been described in detail to facilitate understanding of the present invention, and are not limited to configurations including all the described components. Further, a part or the whole of, for instance, the above-described components, functions, and processing sections may be implemented by hardware designed, for example, with an integrated circuit.

Moreover, for example, the above-described components and functions may be implemented by software that causes a processor to interpret and execute programs for implementing the individual functions. Information such as the programs for implementing the individual functions, tables, and files may be recorded in a storage device such as a memory, a hard disk, or an SSD (Solid State Drive) or recorded on a recording medium such as an IC card, an SD card, or a DVD.

The present system 10 may be summarized as follows. [1] The present system 10 provides support for a safe operation of the vehicle 8 by using the protection information received from the ground device. The present system 10 includes the vehicle 8, the onboard device 6, the first device 1, and the second devices 2 and 3. The vehicle 8 runs when the wheel 4 rolls on a track. The first device 1 detects the rotation of at least one of the wheel 4 and an axle of the wheel 4. The second devices 2 and 3, which are different from the first device 1, detect a running state of the vehicle 8.

The onboard device 6 is a control device that is mounted in the vehicle 8 to control the running of the vehicle 8. In accordance with the result of detection by the first device 1 and with the results of detection by the second devices 2 and 3, the onboard device 6 determines at least one of gliding and idling of the vehicle 8. The onboard device 6 exercises protective control over the running of the vehicle 8 in accordance with the result of the determination and with a signal from the ground device.

[2] The onboard device 6 may only be mounted in the vehicle 8 and configured to control the vehicle in accordance with the protection information. Further, it is preferable that the onboard device 6 include the computation section 5 and the abnormality notification section 7 or be connected to them so as to be able to exchange control signals with them. The computation section 5 determines the difference between the first system speed V1, which is obtained by the first device 1, and the second system speed V2, which is obtained by the second devices 2 and 3, and then determines the amount of change in the difference. When a threshold is exceeded by the amount of change in the difference, the abnormality notification section 7 determines that an abnormal situation, namely, at least either one of idling and gliding of the wheel 4, has occurred, and reports the result of the determination in such a manner that the result of the determination is reflected in the control of the vehicle 8.

Referring to FIG. 1, the rotation speed detection device 1 denotes the first device 1, and the ground speed detection device 2 and the acceleration detection device 3 denote the second devices 2 and 3, respectively. A phenomenon of a sudden change in the rotation speed of the wheel 4 can be detected by monitoring the first system speed V1. This makes it possible to operate on principles of detecting idling, gliding, or re-adhesion from the phenomenon of the sudden change in the rotation speed of the wheel 4.

However, when the above principles are applied in a case where the rotation speed of the wheel 4 being monitored is slowly changed, it is difficult for a conventional detection method to reliably detect an incident, such as idling, gliding, or re-adhesion. In this case, the encountered phenomenon is not idling or gliding and obviously not re-adhesion as long as the first system speed V1 of the vehicle 8 in service is actually changing based on an operating procedure performed for startup acceleration or braking stop.

Meanwhile, even if the encountered incident is slight idling or gliding, it is difficult to reliably identify the incident. Under such circumstances, the present system 10 is configured to be able to highly accurately detect an incident occurring in relation to the speed V of the vehicle 8, by combining the information regarding the first system speed V1 with the information regarding the second system speeds V2 and V3, which are derived from a system other than the system of the first system speed V1.

The second devices 2 and 3 are able to output the second system speeds V2 and V3 of the vehicle 8 based on the second phenomenon which is different from the first phenomenon related to the rotation of the wheel 4. In other words, the second devices 2 and 3 are able to output the second system speeds V2 and V3 based on the second phenomenon which is not directly related to the rotation of the wheel 4 and is entirely close to a state where the vehicle 8 in service is actually engaged in startup acceleration or braking stop.

The phenomenon of the sudden change in the rotation speed of the wheel 4 can be detected by monitoring the first system speed V1. Meanwhile, the second system speeds V2 and V3 are able to more faithfully express a speed change in an actual running state of the vehicle 8 than the first system speed V1 even in the midst of an abnormal situation where the vehicle 8 is idling or gliding. Here, the computation section 5 determines the amount of change in the difference between the first system speed V1 and the second system speeds V2 and V3.

The difference V1 - V2 or the difference V1 - V3, which are mentioned above, is determined by removing a change caused by a phenomenon of startup acceleration or braking stop invoked by performing a predetermined operating procedure (normal acceleration/deceleration phenomenon) from a change in the first system speed V1 due to an incident phenomenon. If, as a result, a slight incident, such as slight idling, gliding, or re-adhesion, is encountered in a case where the rotation speed of the wheel 4 being monitored is slowly changed, it is possible to detect only such an incident phenomenon.

When the threshold is exceeded by the amount of change in the difference, the abnormality notification section 7 determines that an abnormal situation, namely, at least either one of idling and gliding of the wheel 4, has occurred (begun). Conversely, when the amount of change in the difference is decreased to a value equal to or smaller than the threshold, the abnormality notification section 7 determines that re-adhesion has occurred subsequently to idling or gliding to terminate (recover from) the abnormal situation. The abnormality notification section 7 reports the result of such determination to the onboard device 6.

The onboard device 6 is mounted in the vehicle 8 and configured to control the vehicle 8 in accordance with the protection information. Further, under the present conditions, the on-rail position X of the vehicle 8 is determined based on the first phenomenon related to the rotation of the wheel 4 of the vehicle 8. If an abnormal situation, such as idling or gliding of the wheel 4, is encountered, the on-rail position X is unavoidably in error.

However, the present system 10 includes the first device 1, the second devices 2 and 3, and the computation section 5. The first device 1 is based on the first phenomenon related to the rotation of the wheel 4. The second devices 2 and 3 are based on the second phenomenon which is not much directly related to the rotation of the wheel 4. The computation section 5 obtains the amount of change in the difference V1 - V2 or V1 - V3 between the output of the first device 1 and the outputs of the second devices 2 and 3. It should be noted that the difference V1 - V2 and the difference V1 - V3 may be each reversed. More specifically, the computation section 5 may obtain the amount of change in the difference V2 - V1 and the amount of change in the difference V3 - V1.

When the amount of change in the difference, which is outputted from the computation section 5, is obtained, it is possible to distinctively determine whether the phenomenon of a change in the rotation speed of the wheel 4 is an incident phenomenon, namely, slight idling, gliding, or re-adhesion, or a normal phenomenon where no gliding occurs. As a result, the present invention can provide the train protection system that is able to detect the occurrence of an incident even from a slight change in rotation speed, in accordance with principles of detecting idling, gliding, or re-adhesion from a phenomenon of a sudden change in the rotation speed of the wheel 4.

[3] The present system 10 includes the vehicle 8 and the train onboard device 6. The vehicle 8 runs when the wheel 4 rolls on a track. The train onboard device 6 controls the running of the vehicle 8. The present system 10 further includes the rotation speed detection device 1 and the acceleration detection device 2. The rotation speed detection device 1 detects the speed V1 of the vehicle 8 from the rotation speed of at least one of the wheel 4 and the axle of the wheel 4. The acceleration detection device 3 detects the acceleration A3 of the vehicle 8.

Further, the train onboard device 6 generates acceleration information A1 from the result of speed detection by the rotation speed detection device 1. Based on the difference (acceleration difference 26 in FIG. 6) between the generated acceleration information A1 and acceleration information A3 derived from the acceleration detection device 3, the train onboard device 6 determines at least one of gliding and idling of the vehicle 8. The train onboard device 6 exercises protective control over the running of the vehicle 8 in accordance with the result of the determination and with a signal from the ground device.

[4] The train onboard device 6 is mounted in the vehicle 8 to control the vehicle in accordance with the protection information including at least the speed information (one of the sets of the speed information V1 to V3). Further, the train onboard device 6 includes the computation section 5 and the abnormality notification section 7 or is connected to them so as to be able to exchange the control signals with them. The computation section 5 determines the difference (acceleration difference 26 in FIG. 6) between the acceleration information A1, which is generated from the result of detection by the rotation speed detection device 1, and the acceleration information A3, which is obtained by the acceleration detection device 3. When a threshold is exceeded by the determined difference (as in the idling detection state 29 in FIG. 6), the abnormality notification section 5 determines that an abnormal situation, namely, at least either one of idling and gliding of the wheel 4, has occurred, and reports the result of the determination in such a manner that the result of the determination is reflected in the control of the vehicle 8.

[5] It is preferable that the present system 10 provide support for a safe operation of the train by using the protection information Y including information regarding the on-rail position X in the moving block. The vehicle 8 is safely operated under a signal system in the moving block while a safety area is secured to prevent a rear-end collision with use of the protection information Y including at least one of the on-rail position X and the speed V. Even when the amount of change in the rotation speed is slight, the present system 10 is able to quickly detect the occurrence of an incident. When a certain correction is immediately made at a time point at which the quickly-detected abnormal situation occurrence signal E (not depicted) is obtained, it is possible to reduce any misalignment of the on-rail position X due to idling or gliding of the wheel 4. This results in increased safety.

[6] The second device 2 regards the second system speed V2, which is obtained by applying the Doppler effect to the second phenomenon, as the ground speed of the vehicle 8. The Doppler effect is the second phenomenon that is not much directly related to the first phenomenon based on the rotation of the wheel 4. This results in acquiring the second system speed V2 that is less affected by speed error due to gliding of the wheel 4. The difference between the second system speed V2 and the first system speed V1 can also be obtained with high accuracy. This provides an advantage of increasing accuracy of an incident detection function. An electromagnetic wave or a sound wave is suitable as the wave for producing the Doppler effect and is easily put into practice.

As the wave for producing the Doppler effect, for example, an electromagnetic wave in the millimeter wave band may also be used. However, an electromagnetic wave in a band other than the millimeter wave band may also be applied.

The second device 3 is configured such that a change in the acceleration signal P3 detected by an acceleration sensor 3 disposed in the vehicle 8 is applicable as the second phenomenon. Unlike the ground system speed V2, the acceleration system speed V3 generated by the acceleration sensor 3 can be formed within a housing that is visually and completely sealed and shielded from the air outside the vehicle 8. This provides an advantage of increasing the degree of freedom of design.

Further, a relation between acceleration and speed can be converted by differentiating or integrating each of them with respect to time. Therefore, arithmetic processing for determining the difference by performing either differentiation or integration can be implemented by executing, for example, a predetermined computer program.

[7] The second device detects the speed V3 of the vehicle 8 by integrating the acceleration information A3 which is obtained from the acceleration system detection device (acceleration sensor) 3 mounted in the vehicle 8.

[8] Conversely, the acceleration detection device 3 detects the acceleration A2 of the vehicle 8 by differentiating the speed information V2 which is obtained from the ground speed detection device (ground speed sensor) 2 mounted in the vehicle 8.

Further, the train onboard device (onboard device) 6 according to the embodiments of the present invention may be summarized as follows.

[9] The onboard device 6 is a control device that is mounted in the vehicle 8 to provide support for a safe operation of the vehicle 8 by controlling the vehicle 8 based on the protection information Y. It is preferable that the onboard device 6 exercise control by using the protection information.

The onboard device 6 includes the first device 1, the second devices 2 and 3, the computation section 5, and the abnormality notification section 7 or is configured to be able to function in combination with the above devices and sections. Configuration requirements of the above-mentioned onboard device 6 are substantially the same as those of the present system 10 described in [1] above and provide advantages same as those of the present system 10.

The present method may be summarized as follows with reference to FIG. 7. FIG. 7 is a flowchart illustrating operating steps of a train protective control method (the present method) adopted by the present system 10 depicted in FIG. 1.

[10] The present method is the train protective control method that involves the use of the vehicle 8 and the onboard device 6. The vehicle 8 runs when the wheel 4 rolls on a track. The onboard device 6 controls the running of the vehicle 8.

As illustrated in FIG. 7, the present method includes a first system speed detection step S1, a second speed system detection step S2, a difference change amount calculation step S3, an abnormality notification step S4, and a train control step S5. In the first system speed detection step S1, the first device 1 detects the rotation of at least one of the wheel 4 and the axle of the wheel 4 and thus detects the first system speed V1 of the vehicle 8. In the second system speed detection step S2, the second devices 2 and 3 detect the second system speed based on the running state of the vehicle 8. In the difference calculation step S3, the computation section 5 determines the amount of change in the difference between the first system speed and the second system speed.

In the abnormality notification step S4, when the threshold is exceeded by the amount of change in the difference, the abnormality notification section 7 determines that an abnormal situation, namely, at least either one of idling and gliding of the wheel 4, has occurred, and reports the result of the determination to the onboard device 6 mounted in the vehicle 8 by inputting the abnormal situation occurrence signal E to the onboard device 6. In the train control step S5, the onboard device 6 controls the vehicle 8 in accordance with contents of the abnormal situation occurrence signal E. Configuration requirements of the present method are also substantially the same as those of the present system 10 described in [1] above and provide advantages same as those of the present system 10.

[11] Further, when the amount of change in the difference is decreased to a value equal to or smaller than the threshold after the threshold is exceeded by the amount of change in the difference to cause an abnormal situation, the abnormality notification section 7 determines that the abnormal situation has terminated. During a period between the occurrence of an abnormal situation, namely, at least either one of idling and gliding of the wheel 4, and the termination of the abnormal situation, which is caused by re-adhesion, it is possible to clarify that, for example, a certain correction is required in the calculation of the on-rail position X based on the first phenomenon related to the rotation of the wheel 4 of the vehicle 8. As a result, combining, for example, certain correction means makes it possible to generate more accurate protection information and provide support for a safe operation of the vehicle 8.

### Description of Reference Characters

- 1:: Rotation speed detection device (first device)
- 2:: Ground speed detection device (second device)
- 3:: Acceleration system detection device (second device)
- 4:: Wheel
- 5:: Computation section
- 6:: Train onboard device (onboard device)
- 7:: Abnormality notification section
- 8:: Train (vehicle)
- 10:: Train protection system (present system)
- 11:: Speed graph
- 12:: Speed difference graph
- 13:: Speed difference change amount graph
- 14:: Gliding detection state graph
- 15:: Idling detection state graph
- 16:: Speed difference
- 17:: Speed difference change amount
- 18:: Gliding detection state
- 19:: Idling detection state
- 21:: Speed graph
- 23:: Acceleration difference graph
- 24:: Gliding detection state graph
- 25:: Idling detection state graph
- 26:: Acceleration difference
- 28:: Gliding detection state
- 29:: Idling detection state
- 31:: Speed graph
- 32:: Distance difference graph
- 33:: Distance difference change amount graph
- 34:: Gliding detection state graph
- 35:: Idling detection state graph
- 36:: Distance difference
- 37:: Distance difference change amount
- 38:: Gliding detection state
- 39:: Idling detection state
- A1:: Rotation system acceleration
- A2:: Ground system acceleration
- A3:: Acceleration system acceleration
- E:: Abnormal situation occurrence signal
- P1:: Rotation speed signal
- P2:: Ground speed signal
- P3:: Acceleration signal
- V1:: Rotation system speed (first system speed)
- V2:: Ground system speed (second system speed)
- V3:: Acceleration system speed (second system speed)

## Claims

1. A train protection system comprising:
a vehicle that runs when a wheel rolls on a track;
a train onboard device (6) that controls running of the vehicle;
a first device (1) that detects a speed of the vehicle from a rotation speed of at least one of the wheel (4) and an axle of the wheel (4); and
a second device (2) that detects a ground speed of the vehicle obtained by applying a Doppler effect,
wherein the second device (2) regards a second system speed obtained by applying the Doppler effect as the ground speed of the vehicle,
a wave for producing the Doppler effect is an electromagnetic wave or a sound wave, and,
in accordance with an amount of change in difference between a result of detection by the first device (1) and a result of detection by the second device (2), the train onboard device (6) determines at least one of gliding and idling of the vehicle, as an incident, and exercises protective control over the running of the vehicle in accordance with a result of the determination and with a signal from a ground device,
wherein the train protection system provides support for a safe operation of the vehicle, by using protection information also including information regarding an on-rail position (X) in a moving block and the vehicle speed, wherein
the protective control includes, in case of an incident determined, an immediate correction of the on-rail position (X) reducing any misalignment of the on-rail position (X) due to the determined incident.

2. The train protection system according to claim 1,
wherein the train onboard device (6) is mounted in the vehicle to control the vehicle in accordance with protection information including at least speed information, and
the train onboard device (6) includes
a computation section (5) that determines an amount of change in difference between a first system speed and the second system speed, the first system speed being obtained by the first device (1), the second system speed being obtained by the second device (2), and
an abnormality notification section (7) that, when a threshold is exceeded by the amount of change in the difference, determines that an abnormal situation, namely, at least one of idling and gliding of the wheel, has occurred, and reports a result of the determination in such a manner that the result of the determination is reflected in the control of the vehicle, or,
instead of including the computation section (5) and the abnormality notification section (7), the train onboard device (6) is connected so as to be able to exchange control signals with the computation section (5) and the abnormality notification section (7).

3. A train protection system comprising:
a vehicle that runs when a wheel rolls on a track;
a train onboard device (6) that controls running of the vehicle;
a rotation speed detection device (1) that detects a speed of the vehicle from a rotation speed of at least one of the wheel and an axle of the wheel; and
an acceleration detection device that detects an acceleration of the vehicle,
wherein the acceleration detection device detects the acceleration of the vehicle by differentiating speed information obtained by a ground speed sensor mounted in the vehicle applying the Doppler effect, and
the train onboard device (6) generates acceleration information from a result of speed detection by the rotation speed detection device (1), determines at least one of gliding and idling of the vehicle, as an incident, in accordance with a difference between the generated acceleration information and information regarding the acceleration detected by the acceleration detection device, and exercises protective control over the running of the vehicle in accordance with a result of the determination and with a signal from a ground device, wherein a wave for producing the Doppler Effect is an electromagnetic wave or sound wave,
wherein the train protection system provides support for a safe operation of the vehicle, by using protection information also including information regarding an on-rail position in a moving block (X) and the vehicle speed, wherein
the protective control includes, in case of an incident determined, an immediate correction of the on-rail position (X) reducing any misalignment of the on-rail position (X) due to the determined incident.

4. The train protection system according to claim 3,
wherein the train onboard device (6) is mounted in the vehicle to control the vehicle in accordance with protection information, and
the train onboard device (6) includes
a computation section (5) that determines the difference between the acceleration information generated from the result of detection by the rotation speed detection device (1) and the acceleration information obtained by the acceleration detection device, and
an abnormality notification section (7) that, when a threshold is exceeded by the difference, determines that an abnormal situation, namely, at least one of idling and gliding of the wheel, has occurred, and reports a result of the determination in such a manner that the result of the determination is reflected in the control of the vehicle, or,
instead of including the computation section (5) and the abnormality notification section (7), the train onboard device (6) is connected so as to be able to exchange control signals with the computation section (5) and the abnormality notification section (7).

5. A train onboard device that is configured to be mounted in a vehicle to control running of the vehicle, the vehicle running when a wheel rolls on a track,
wherein the train onboard device (6) acquires
a first system speed (V1) or a first acceleration, the first system speed and the first acceleration being obtained by a first device (1) that detects rotation of at least one of the wheel (4) and an axle of the wheel (4), and
a second system speed (V2) or a second acceleration, the second system speed and the second acceleration being obtained by a second device (2) that detects a running state of the vehicle,
the second device (2) regards the second system speed (V2) obtained by applying the Doppler effect as a ground speed of the vehicle,
a wave for producing the Doppler effect is an electromagnetic wave or a sound wave, and,
when a threshold is exceeded by an amount of change in difference between the first system speed (V1) and the second system speed (V2) or when a threshold is exceeded by a difference between the first acceleration and the second acceleration, the train onboard device (6) determines at least one of gliding and idling of the vehicle, as an incident, and exercises protective control over the running of the vehicle in accordance with a result of the determination and with a signal from a ground device,
the train onboard device is configured to provide support for a safe operation of the vehicle (8) by controlling the vehicle (8) based on the protection information regarding the on-rail position in the moving block (X) and the vehicle speed, wherein
the protective control includes, in case of an incident determined, an immediate correction of the on-rail position (X) reducing any misalignment of the on-rail position (X) due to the determined incident.

6. A train protective control method that involves use of a vehicle and a train onboard device (6), according to claim 5, the vehicle running when a wheel rolls on a track, the train onboard device (6) controlling running of the vehicle, the train protective control method comprising:
a first system detection step of causing a first device (1) to detect rotation of at least one of the wheel (4) and an axle of the wheel (4) and thus detect a first system speed (V1) of the vehicle or a first acceleration of the vehicle;
a second system detection step of causing a second device (2) to detect a second system speed (V2) or a second acceleration, the second system speed and the second acceleration being based on a running state of the vehicle;
a difference calculation step of causing a computation section to determine an amount of change in difference between the first system speed and the second system speed or determine a difference between the first acceleration and the second acceleration;
an abnormality notification step of, when a threshold is exceeded by an amount of change in difference in speed information or by a difference in acceleration information, causing an abnormality notification section (7) to determine that an abnormal situation, namely, at least either one of idling and gliding of the wheel (4), has occurred, and report a result of the determination to the train onboard device (6) mounted in the vehicle by inputting an abnormal situation occurrence signal to the train onboard device (6); and
a step of providing support for a safe operation of the vehicle, by using protection information also including information regarding an on-rail position in a moving block (X) and the vehicle speed,
a train control step of causing the train onboard device (6) to control the vehicle by using the abnormal situation occurrence signal (E), wherein, in case of an abnormal situation determined, said step including an immediate correction of the on- rail position (X) reducing any misalignment of the on-rail position (X) due to the determined incident,
wherein the second device regards the second system speed obtained by applying the Doppler effect as a ground speed of the vehicle, and
a wave for producing the Doppler effect is an electromagnetic wave or a sound wave.

7. The train protective control method according to claim 6,
wherein, in a case where the threshold is exceeded by the amount of change in the difference in the speed information or by the difference in the acceleration information to cause the abnormal situation, and then the difference is decreased to a value equal to or smaller than the threshold, the abnormality notification section (7) determines that the abnormal situation has terminated.

## Patentansprüche

1. Zugschutzsystem, das Folgendes umfasst:
ein Fahrzeug, das fährt, wenn ein Rad auf einer Schiene rollt;
eine Zugbordvorrichtung (6), die das Fahren des Fahrzeugs steuert;
eine erste Vorrichtung (1), die eine Geschwindigkeit des Fahrzeugs aus einer Drehzahl des Rads (4) und/oder einer Achse des Rads (4) detektiert; und
eine zweite Vorrichtung (2), die eine Reisegeschwindigkeit des Fahrzeugs detektiert, die durch Anwenden des Doppler-Effekts erhalten wird,
wobei die zweite Vorrichtung (2) eine zweite Systemgeschwindigkeit, die durch Anwenden des Doppler-Effekts erhalten wird, als die Reisegeschwindigkeit des Fahrzeugs betrachtet,
eine Welle zum Erzeugen des Doppler-Effekts eine elektromagnetische Welle oder eine Schallwelle ist, und
die Zugbordvorrichtung (6) gemäß einem Änderungsbetrag der Differenz zwischen einem Ergebnis der Detektion durch die erste Vorrichtung (1) und einem Ergebnis der Detektion durch die zweite Vorrichtung (2) Gleiten und/oder Leerlauf des Fahrzeugs als einen Störfall bestimmt und eine Schutzsteuerung über das Fahren des Fahrzeugs gemäß einem Ergebnis der Bestimmung und einem Signal von einer Bodenvorrichtung ausführt,
wobei das Zugschutzsystem unter Verwendung von Schutzinformationen, die außerdem Informationen bezüglich einer Position (X) auf der Schiene eines Bewegungsblocks und die Fahrzeuggeschwindigkeit enthalten, Unterstützung für einen sicheren Betrieb des Fahrzeugs bereitstellt, wobei
die Schutzsteuerung dann, wenn ein Störfall bestimmt wird, eine sofortige Korrektur der Position (X) auf der Schiene, wobei jegliche Fehlausrichtung der Position (X) auf der Schiene aufgrund des bestimmten Störfalls verringert wird, umfasst.

2. Zugschutzsystem nach Anspruch 1,
wobei die Zugbordvorrichtung (6) im Fahrzeug angebracht ist, um das Fahrzeug gemäß Schutzinformationen zu steuern, die mindestens Geschwindigkeitsinformationen enthalten, und
die Zugbordvorrichtung (6) Folgendes enthält:
einen Rechenabschnitt (5), der einen Änderungsbetrag der Differenz zwischen einer ersten Systemgeschwindigkeit und der zweiten Systemgeschwindigkeit bestimmt, wobei die erste Systemgeschwindigkeit durch die erste Vorrichtung (1) erhalten wird und die zweite Systemgeschwindigkeit durch die zweite Vorrichtung (2) erhalten wird, und
einen Anomalie-Benachrichtigungsabschnitt (7), der dann, wenn durch den Änderungsbetrag der Differenz ein Schwellenwert überschritten wird, bestimmt, das eine anomale Situation, konkret Leerlauf und/oder Gleiten des Rads, aufgetreten ist, und ein Ergebnis der Bestimmung auf eine derartige Weise meldet, dass das Ergebnis der Bestimmung bei der Steuerung des Fahrzeugs wiedergegeben wird, oder
die Zugbordvorrichtung (6) anstelle des Enthaltens des Rechenabschnitts (5) und des Anomalie-Benachrichtigungsabschnitts (7) auf eine Weise verbunden ist, dass sie mit dem Rechenabschnitt (5) und dem Anomalie-Benachrichtigungsabschnitt (7) Steuersignale austauschen kann.

3. Zugschutzsystem, das Folgendes umfasst:
ein Fahrzeug, das fährt, wenn ein Rad auf einer Schiene rollt;
eine Zugbordvorrichtung (6), die das Fahren des Fahrzeugs steuert;
eine Drehzahl-Detektionsvorrichtung (1), die eine Geschwindigkeit des Fahrzeugs aus einer Drehzahl des Rads und/oder einer Achse des Rads bestimmt; und
eine Beschleunigungs-Detektionsvorrichtung, die eine Beschleunigung des Fahrzeugs detektiert,
wobei die Beschleunigungs-Detektionsvorrichtung die Beschleunigung des Fahrzeugs durch Differenzieren von Geschwindigkeitsinformationen detektiert, die durch einen Reisegeschwindigkeitssensor erhalten werden, der im Fahrzeug angebracht ist, der der Doppler-Effekt anwendet, und
die Zugbordvorrichtung (6) aus einem Ergebnis der Geschwindigkeitsdetektion durch die Drehzahl-Detektionsvorrichtung (1) Beschleunigungsinformationen erzeugt, gemäß einer Differenz zwischen den erzeugten Beschleunigungsinformationen und Informationen bezüglich der Beschleunigung, die durch die Beschleunigungs-Detektionsvorrichtung detektiert werden, Gleiten und/oder Leerlauf des Fahrzeugs als einen Störfall bestimmt und eine Schutzsteuerung über das Fahren des Fahrzeugs gemäß einem Ergebnis der Bestimmung und einem Signal von einer Bodenvorrichtung ausführt,
wobei eine Welle zum Erzeugen des Doppler-Effekts eine elektromagnetische Welle oder eine Schallwelle ist,
wobei das Zugschutzsystem unter Verwendung von Schutzinformationen, die außerdem Informationen bezüglich einer Position (X) auf der Schiene eines Bewegungsblocks und die Fahrzeuggeschwindigkeit enthalten, Unterstützung für einen sicheren Betrieb des Fahrzeugs bereitstellt, wobei
die Schutzsteuerung dann, wenn ein Störfall bestimmt wird, eine sofortige Korrektur der Position (X) auf der Schiene, wobei jegliche Fehlausrichtung der Position (X) auf der Schiene aufgrund des bestimmten Störfalls verringert wird, enthält.

4. Zugschutzsystem nach Anspruch 3,
wobei die Zugbordvorrichtung (6) im Fahrzeug angebracht ist, um das Fahrzeug gemäß Schutzinformationen zu steuern, und
die Zugbordvorrichtung (6) Folgendes enthält:
einen Rechenabschnitt (5), der die Differenz zwischen den Beschleunigungsinformationen, die aus dem Ergebnis der Detektion durch die Drehzahl-Detektionsvorrichtung (1) erzeugt werden, und den Beschleunigungsinformationen, die durch die Beschleunigungs-Detektionsvorrichtung detektiert werden, bestimmt, und
einen Anomalie-Benachrichtigungsabschnitt (7), der dann, wenn durch die Differenz ein Schwellenwert überschritten wird, bestimmt, das eine anomale Situation, konkret Leerlauf und/oder Gleiten des Rads, aufgetreten ist, und ein Ergebnis der Bestimmung auf eine derartige Weise meldet, dass das Ergebnis der Bestimmung bei der Steuerung des Fahrzeugs wiedergegeben wird, oder
die Zugbordvorrichtung (6) anstelle des Enthaltens des Rechenabschnitts (5) und des Anomalie-Benachrichtigungsabschnitts (7) auf eine Weise verbunden ist, dass sie mit dem Rechenabschnitt (5) und dem Anomalie-Benachrichtigungsabschnitt (7) Steuersignale austauschen kann.

5. Zugbordvorrichtung, die konfiguriert ist, in einem Fahrzeug angebracht zu sein, um das Fahren des Fahrzeugs zu steuern, wobei das Fahrzeug fährt, wenn ein Rad auf einer Schiene rollt,
wobei die Zugbordvorrichtung (6) Folgendes erfasst:
eine erste Systemgeschwindigkeit (V1) oder eine erste Beschleunigung, wobei die erste Systemgeschwindigkeit und die erste Beschleunigung durch eine erste Vorrichtung (1) erhalten werden, die die Drehung des Rads (4) und/oder einer Achse des Rads (4) detektiert, und
eine zweite Systemgeschwindigkeit (V2) oder eine zweite Beschleunigung, wobei die zweite Systemgeschwindigkeit und die zweite Beschleunigung durch eine zweite Vorrichtung (2) erhalten werden, die einen Fahrzustand des Fahrzeugs detektiert,
wobei die zweite Vorrichtung (2) die zweite Systemgeschwindigkeit (V2), die durch Anwenden des Doppler-Effekts erhalten wird, als eine Reisegeschwindigkeit des Fahrzeugs betrachtet,
eine Welle zum Erzeugen des Doppler-Effekts eine elektromagnetische Welle oder eine Schallwelle ist, und
die Zugbordvorrichtung (6) dann, wenn durch einen Änderungsbetrag der Differenz zwischen der ersten Systemgeschwindigkeit (V1) und der zweiten Systemgeschwindigkeit (V2) ein Schwellenwert überschritten wird oder wenn durch eine Differenz zwischen der ersten Beschleunigung und der zweiten Beschleunigung ein Schwellenwert überschritten wird, Gleiten und/oder Leerlauf des Fahrzeugs als einen Störfall bestimmt und eine Schutzsteuerung über das Fahren des Fahrzeugs gemäß einem Ergebnis der Bestimmung und einem Signal von einer Bodenvorrichtung ausführt,
die Zugbordvorrichtung konfiguriert ist, durch Steuern des Fahrzeugs (8) auf der Grundlage der Schutzinformationen bezüglich der Position (X) auf der Schiene des Bewegungsblocks und der Fahrzeuggeschwindigkeit Unterstützung für einen sicheren Betrieb des Fahrzeugs (8) bereitzustellen, wobei
die Schutzsteuerung dann, wenn ein Störfall bestimmt wird, eine sofortige Korrektur der Position (X) auf der Schiene, wobei jegliche Fehlausrichtung der Position (X) auf der Schiene aufgrund des bestimmten Störfalls verringert wird, enthält.

6. Zugschutzsteuerungsverfahren, das die Verwendung eines Fahrzeugs und einer Zugbordvorrichtung (6) nach Anspruch 5 enthält, wobei das Fahrzeug fährt, wenn ein Rad auf einer Schiene rollt, wobei die Zugbordvorrichtung (6) das Fahren des Fahrzeugs steuert, wobei das Zugschutzsteuerungsverfahren Folgendes umfasst:
einen ersten Systemdetektionsschritt des Bewirkens, dass eine erste Vorrichtung (1) die Drehung des Rads (4) und/oder einer Achse des Rads (4) detektiert und somit eine erste Systemgeschwindigkeit (V1) des Fahrzeugs oder eine erste Beschleunigung des Fahrzeugs detektiert;
einen zweiten Systemdetektionsschritt des Bewirkens, dass eine zweite Vorrichtung (2) eine zweite Systemgeschwindigkeit (V2) oder eine zweite Beschleunigung detektiert, wobei die zweite Systemgeschwindigkeit und die zweite Beschleunigung auf einem Fahrzustand des Fahrzeugs beruhen;
einen Differenzberechnungsschritt des Bewirkens, dass ein Rechenabschnitt einen Änderungsbetrag der Differenz zwischen der ersten Systemgeschwindigkeit und der zweiten Systemgeschwindigkeit bestimmt oder eine Differenz zwischen der ersten Beschleunigung und der zweiten Beschleunigung bestimmt;
einen Anomalie-Benachrichtigungsschritt des Bewirkens dann, wenn durch einen Änderungsbetrag der Differenz der Geschwindigkeitsinformationen oder durch eine Differenz der Beschleunigungsinformationen ein Schwellenwert überschritten wird, dass ein Anomalie-Benachrichtigungsabschnitt (7) bestimmt, dass eine anomale Situation, konkret Leerlauf und/oder Gleiten des Rads (4), aufgetreten ist, und durch Eingeben eines Signals zum Auftreten einer anomalen Situation in die Zugbordvorrichtung (6) ein Ergebnis der Bestimmung an die Zugbordvorrichtung (6) meldet, die im Fahrzeug angebracht ist; und
einen Schritt des Bereitstellens von Unterstützung für einen sicheren Betrieb des Fahrzeugs unter Verwendung von Schutzinformationen, die außerdem Informationen bezüglich einer Position (X) auf der Schiene eines Bewegungsblocks und die Fahrzeuggeschwindigkeit enthalten,
einen Zugsteuerungsschritt des Bewirkens, dass die Zugbordvorrichtung (6) das Fahrzeug unter Verwendung des Signals (E) zum Auftreten einer anomalen Situation steuert, wobei der Schritt dann, wenn eine anomale Situation bestimmt wird, eine sofortige Korrektur der Position (X) auf der Schiene, wobei jegliche Fehlausrichtung der Position (X) auf der Schiene aufgrund des bestimmten Störfalls verringert wird, enthält,
wobei die zweite Vorrichtung die zweite Systemgeschwindigkeit, die durch Anwenden des Doppler-Effekts erhalten wird, als eine Reisegeschwindigkeit des Fahrzeugs betrachtet, und
eine Welle zum Erzeugen des Doppler-Effekts eine elektromagnetische Welle oder eine Schallwelle ist.

7. Zugschutzsteuerungsverfahren nach Anspruch 6,
wobei dann, wenn der Schwellenwert durch den Änderungsbetrag der Differenz der Geschwindigkeitsinformationen oder durch die Differenz der Beschleunigungsinformationen überschritten wird, derart, dass die anomale Situation bewirkt wird, und anschließend die Differenz auf einen Wert verringert wird, der kleiner oder gleich dem Schwellenwert ist, der Anomalie-Benachrichtigungsabschnitt (7) bestimmt, dass die anomale Situation beendet ist.

## Revendications

1. Système de protection de train comprenant :
un véhicule qui circule quand une roue roule sur un rail ;
un dispositif embarqué dans un train (6) qui commande une circulation du véhicule ;
un premier dispositif (1) qui détecte une vitesse du véhicule à partir d'une vitesse de rotation d'au moins un élément parmi la roue (4) et un essieu de la roue (4) ; et
un second dispositif (2) qui détecte une vitesse au sol du véhicule obtenue en appliquant un effet Doppler,
dans lequel le second dispositif (2) concerne une vitesse de second système obtenue en appliquant l'effet Doppler à titre de vitesse au sol du véhicule,
une onde destinée à produire l'effet Doppler est une onde électromagnétique ou une onde sonore, et,
en fonction d'un changement quantitatif dans une différence entre un résultat de détection par le premier dispositif (1) et un résultat de détection par le second dispositif (2), le dispositif embarqué dans un train (6) détermine l'un au moins d'un glissement et d'un ralentissement du véhicule, à titre d'incident, et exerce une commande de protection sur la circulation du véhicule en fonction d'un résultat de la détermination et avec un signal provenant d'un dispositif au sol,
dans lequel le système de protection de train fournit une assistance permettant un fonctionnement sûr du véhicule, en utilisant des informations de protection incluant également des informations concernant une position sur rail (X) dans un bloc mobile et la vitesse du véhicule, dans lequel
la commande de protection inclut, dans un cas où un incident est déterminé, une correction immédiate de la position sur rail (X) réduisant tout désalignement de la position sur rail (X) dû à l'incident déterminé.

2. Système de protection de train selon la revendication 1,
dans lequel le dispositif embarqué dans un train (6) est monté dans le véhicule pour commander le véhicule en fonction d'informations de protection incluant au moins des informations de vitesse, et
le dispositif embarqué dans un train (6) inclut
une section de calcul (5) qui détermine un changement quantitatif dans une différence entre une vitesse de premier système et la vitesse de second système, la vitesse de premier système étant obtenue par le premier dispositif (1), la vitesse de second système étant obtenue par le second dispositif (2), et
une section de notification d'anomalie (7) qui, quand le changement quantitatif dans la différence dépasse un seuil, détermine qu'une situation anormale, à savoir l'un au moins d'un ralentissement et d'un glissement de la roue, est survenu, et rend compte d'un résultat de la détermination de telle manière que le résultat de la détermination est reflété dans la commande du véhicule, ou
au lieu d'inclure la section de calcul (5) et la section de notification d'anomalie (7), le dispositif embarqué dans un train (6) est connecté afin d'être en mesure d'échanger des signaux de commande avec la section de calcul (5) et la section de notification d'anomalie (7).

3. Système de protection de train comprenant :
un véhicule qui circule quand une roue roule sur un rail ;
un dispositif embarqué dans un train (6) qui commande une circulation du véhicule ;
un dispositif de détection de vitesse de rotation (1) qui détecte une vitesse du véhicule à partir d'une vitesse de rotation d'au moins un élément parmi la roue et un essieu de la roue ; et
un dispositif de détection d'accélération qui détecte une accélération du véhicule,
dans lequel le dispositif de détection d'accélération détecte l'accélération du véhicule en différenciant des informations de vitesse obtenues par un capteur de vitesse au sol monté dans le véhicule appliquant l'effet Doppler, et
le dispositif embarqué dans un train (6) génère des informations d'accélération à partir d'un résultat de détection de vitesse par le dispositif de détection de vitesse de rotation (1), détermine l'un au moins d'un glissement et d'un ralentissement du véhicule, à titre d'incident, en fonction d'une différence entre les informations d'accélération générées et les informations concernant l'accélération détectées par le dispositif de détection d'accélération, et exerce une commande de protection sur la circulation du véhicule en fonction d'un résultat de la détermination et avec un signal provenant d'un dispositif au sol,
dans lequel une onde destinée à produire l'effet Doppler est une onde électromagnétique ou une onde sonore,
dans lequel le système de protection de train fournit une assistance permettant un fonctionnement sûr du véhicule, en utilisant des informations de protection incluant également des informations concernant une position sur rail dans un bloc mobile (X) et la vitesse du véhicule, dans lequel
la commande de protection inclut, dans un cas où un incident est déterminé, une correction immédiate de la position sur rail (X) réduisant tout désalignement de la position sur rail (X) dû à l'incident déterminé.

4. Système de protection de train selon la revendication 3,
dans lequel le dispositif embarqué dans un train (6) est monté dans le véhicule pour commander le véhicule en fonction d'informations de protection, et
le dispositif embarqué dans un train (6) inclut
une section de calcul (5) qui détermine la différence entre les informations d'accélération générées à partir du résultat de détection par le dispositif de détection de vitesse de rotation (1) et les informations d'accélération obtenues par le dispositif de détection d'accélération, et
une section de notification d'anomalie (7) qui, quand la différence dépasse un seuil, détermine qu'une situation anormale, à savoir l'un au moins d'un ralentissement et d'un glissement de la roue, est survenue, et rend compte d'un résultat de la détermination de telle manière que le résultat de la détermination est reflété dans la commande du véhicule, ou
au lieu d'inclure la section de calcul (5) et la section de notification d'anomalie (7), le dispositif embarqué dans un train (6) est connecté de manière à être en mesure d'échanger des signaux de commande avec la section de calcul (5) et la section de notification d'anomalie (7).

5. Dispositif embarqué dans un train qui est configuré pour être monté dans un véhicule pour commander une circulation du véhicule, le véhicule circulant quand une roue roule sur un rail,
dans lequel le dispositif embarqué dans un train (6) acquiert
une vitesse de premier système (V1) ou une première accélération, la vitesse de premier système et la première accélération étant obtenues par un premier dispositif (1) qui détecte une rotation d'au moins un élément parmi la roue (4) et un essieu de la roue (4), et
une vitesse de second système (V2) ou une seconde accélération, la vitesse de second système et la seconde accélération étant obtenues par un second dispositif (2) qui détecte un état de circulation du véhicule,
le second dispositif (2) concerne la vitesse de second système (V2) obtenue en appliquant l'effet Doppler à titre de vitesse au sol du véhicule,
une onde destinée à produire l'effet Doppler est une onde électromagnétique ou une onde sonore, et,
quand un changement quantitatif dans une différence entre la vitesse de premier système (V1) et la vitesse de second système (V2) dépasse un seuil, ou quand une différence entre la première accélération et la seconde accélération dépasse un seuil, le dispositif embarqué dans un train (6) détermine l'un au moins d'un glissement et d'un ralentissement du véhicule, à titre d'incident, et exerce une commande de protection sur la circulation du véhicule en fonction d'un résultat de la détermination et avec un signal provenant d'un dispositif au sol,
le système de protection de train est configuré pour fournir une assistance permettant un fonctionnement sûr du véhicule (8) en commandant le véhicule (8) sur la base des informations de protection concernant la position sur rail dans le bloc mobile (X) et la vitesse du véhicule, dans lequel
la commande de protection inclut, dans un cas où un incident est déterminé, une correction immédiate de la position sur rail (X) réduisant tout désalignement de la position sur rail (X) dû à l'incident déterminé.

6. Procédé de commande de protection de train qui implique une utilisation d'un véhicule et d'un dispositif embarqué dans un train (6), selon la revendication 5, le véhicule circulant quand une roue roule sur un rail, le dispositif embarqué dans un train (6) commandant une circulation du véhicule, le procédé de commande de protection de train comprenant :
une étape de détection de premier système consistant à amener un premier dispositif (1) à détecter une rotation d'au moins un élément parmi la roue (4) et un essieu de la roue (4), et ainsi à détecter une vitesse de premier système (V1) du véhicule ou une première accélération du véhicule ;
une étape de détection de second système consistant à amener un second dispositif (2) à détecter une vitesse de second système (V2) ou une seconde accélération, la vitesse de second système et la seconde accélération étant basées sur un état de circulation du véhicule ;
une étape de calcul de différence consistant à amener une section de calcul à déterminer un changement quantitatif dans une différence entre la vitesse de premier système et la vitesse de second système ou à déterminer une différence entre la première accélération et la seconde accélération ;
une étape de notification d'anomalie consistant à, quand un changement quantitatif dans une différence dans des informations de vitesse ou dans une différence dans des informations d'accélération dépasse un seuil, amener une section de notification d'anomalie (7) à déterminer qu'une situation anormale, à savoir l'un au moins d'un ralentissement et d'un glissement de la roue (4), est survenue, et à rendre compte d'un résultat de la détermination au dispositif embarqué dans un train (6) monté dans le véhicule en entrant un signal d'occurrence de situation anormale vers le dispositif embarqué dans un train (6) ; et
une étape consistant à fournir une assistance permettant un fonctionnement sûr du véhicule, en utilisant des informations de protection incluant également des informations concernant une position sur rail dans un bloc mobile (X) et la vitesse du véhicule,
une étape de commande de train consistant à amener le dispositif embarqué dans un train (6) à commander le véhicule en utilisant le signal d'occurrence de situation anormale (E), dans lequel, dans un cas où une situation anormale est déterminée, ladite étape inclut une correction immédiate de la position sur rail (X) réduisant tout désalignement de la position sur rail (X) dû à l'incident déterminé,
dans lequel le second dispositif concerne la vitesse de second système obtenue en appliquant l'effet Doppler à titre de vitesse au sol du véhicule, et une onde destinée à produire l'effet Doppler est une onde électromagnétique ou une onde sonore.

7. Procédé de commande de protection de train selon la revendication 6,
dans lequel, dans un cas où le changement quantitatif dans la différence dans les informations de vitesse ou la différence dans les informations d'accélération dépasse le seuil pour entraîner la situation anormale, et où la différence est alors diminuée jusqu'à une valeur égale ou inférieure au seuil, la section de notification d'anomalie (7) détermine que la situation anormale a pris fin.
